Europäisches Patentamt

European Patent Office

Office européen des brevets

(19)

(11) **EP 1 306 811 A1**

(12) **EUROPEAN PATENT APPLICATION**

(43) Date of publication:
**02.05.2003 Bulletin 2003/18**

(51) Int Cl.7: **G06T 15/40**

(21) Application number: **02257324.0**

(22) Date of filing: **22.10.2002**

| | |
|---|---|
| (84) Designated Contracting States:<br>**AT BE BG CH CY CZ DE DK EE ES FI FR GB GR**<br>**IE IT LI LU MC NL PT SE SK TR**<br>Designated Extension States:<br>**AL LT LV MK RO SI** | (72) Inventors:<br>• **Hussain, Zahid**<br>  **Ascot, Berkshire, SL5 9TQ (GB)**<br>• **Simpson, Robert**<br>  **Redland, Bristol BS6 6QD (GB)** |
| (30) Priority: **25.10.2001 EP 01309059** | (74) Representative: **Style, Kelda Camilla Karen et al**<br>**Page White & Farrer,**<br>**54 Doughty Street**<br>**London WC1N 2LS (GB)** |
| (71) Applicant: **STMicroelectronics Limited**<br>**Bristol BS12 4SQ (GB)** | |

(54) **Triangle identification buffer**

(57)    A method of rendering a plurality of triangles into a colour buffer defined by a plurality of pixel locations, utilising a triangle identification buffer and a depth buffer. A relatively unique identifier is assigned to each of the triangles to be rendered. Before colour and texture mapping, each triangle is depth compared on a per pixel basis. If a pixel of a current triangle is in front of any existing pixel at that point, the current triangles identifier is over written into a triangle identification buffer. Colour texture data is only retrieved for each triangle that appears in the identification buffer once all triangles have been compared.

**Description**

The present invention relates to graphical manipulation of objects defined in three-dimensional space, and, more particularly, to the rendering of such objects into a colour buffer for subsequent display on a two-dimensional screen such as a computer monitor.

The invention has been -developed primarily for use in graphics chips where speed and throughput of rendered polygons is paramount, and will be described hereinafter with reference to this application. However, it will be appreciated that the invention is not limited to use in this field.

The market for "3D" accelerator video cards for PCs and other computing platforms has grown drastically in recent years. With this growth has come an increasing desire for faster accelerator chips incorporating an increasing number of features such as realistic lighting models and higher onscreen polygon counts at higher resolutions.

A typical 3D accelerator includes a rasterising section that takes mathematical representations of the polygons (usually triangles) in three-dimensional space and renders them down to a two dimensional representation suitable for display on a computer monitor or the like. The steps in this procedure are relatively well known in the art, and include a color rendering stage where colors from a texture map associated with each polygon are mapped to individual pixels in the two dimensional buffer. Due to memory bandwidth issues, it is desirable to reduce the amount of textures that are imported for mapping onto each polygon.

To ensure that polygons are drawn correctly on the screen, each pixel of each polygon as it is considered is depth compared with any pixel already at a corresponding pixel location in the colour buffer. This is usually done with reference to a depth buffer. In one such arrangement, the depth buffer is the same size as the colour buffer, and is used to maintain depth data in the form of a depth value for each pixel that has been written to the colour buffer. When a new pixel is being considered, its depth value is compared with the depth value associated with any pixel that has already been written to the colour buffer at the new pixel's location. In the event that the new pixel is behind the old, then it is discarded because it will be obscured. Conversely, if the new pixel is in front of the old, the new pixel's depth value replaces that of the old pixel in the depth-buffer, and colour data is retrieved from associated texture memory and written over the old pixel's colour data in the colour buffer.

Whilst it provides technically useful results, the use of a depth buffer in this fashion often results in large amounts of texture data unnecessarily being retrieved and written to the colour buffer. This is because a particular pixel location in the colour buffer may be written over several times as new triangles are found to overlay existing triangles at those locations.

In accordance with a first aspect of the invention, there is provided a method of rendering a plurality of triangles into a colour buffer defined by a plurality of pixel locations, utilising a triangle identification buffer and a depth buffer, the method including the steps of:

(a) assigning a relatively unique identifier to each of the triangles to be rendered;
(b) generating triangle pixels based on a first one of the triangles, each of the triangle pixels having associated with it an (x,y) position and a depth value;
(c) writing the depth value associated with each of the pixels to pixel locations in the depth buffer, the pixel locations corresponding with the respective (x,y) positions generated in step (b);
(d) writing the identifier associated with the triangle to the pixel locations in the buffer corresponding with the respective (x,y) positions generated in step (b); and
(e) for each remaining triangle to be rendered:

(i) generating triangle pixels, each of the triangle pixels having associated with it an (x,y) position and a depth value;
(ii) comparing the depth value of at least some of the triangle pixels generated in (i) with the depth values stored at respective corresponding pixel locations in the depth buffer, thereby to determine for each pixel location whether the triangle whose identifier is already in the triangle identification buffer is in front of or behind the triangle being compared; and
(iii) in the event that the triangle whose identifier is already in the triangle identification buffer is behind the triangle being compared at a given pixel location, writing the identifier of the triangle being compared into the identification buffer at that pixel location;

(f) mapping colour data into the colour buffer on the basis of the contents of the triangle buffer once at least a plurality of the triangles has been depth compared.

Preferably step (f) includes the substeps of:

(i) selecting an identifier from the identifier buffer;

(ii) retrieving from the triangle buffer the triangle associated with the selected identifier;

(iii) rasterising the triangle, computing colour only, such that, for each pixel coordinate being considered, if the identification buffer contains the identifier of the triangle being rasterised, writing the colour value of the triangle at that coordinate to the colour buffer; and

(iv) repeating substeps (i) to (iii) until the triangles associated with all identifiers in the identifier buffer have been rasterised.

Preferably in the event a triangle being rasterised in step (f) has a texture associated with it, step (f) further includes the substep of forwarding information to the texture cache to enable prefetching of the texture to commence.

Preferably the depth buffer and the triangle identification buffer are combined, such that, at each address defining a pixel location in the combined buffer, there is space for a depth value and a triangle identifier value.

In one preferred form, the depth buffer and triangle buffer are combined with the colour buffer, such that, at each address defining a pixel location in the combined buffer, there is space for the depth value, the triangle identifier value and colour values.

Preferably, the steps of generating triangle pixels include the sub-step of scan converting the triangles for which the pixels are to be generated.

Preferably, the color data are based on textures stored in an associated texture memory.

A preferred embodiment of the present invention will now be described, by way of example only, with reference to the accompanying drawings, in which:

Figure 1A is a schematic diagram showing a graphics accelerator card architecture for generating a texture mapped two-dimensional representation of a plurality of polygons represented in three-dimensional space, in accordance with the method of the invention;

Figure 1B is a schematic diagram showing the features of one of the VPUs shown in Figure 1A;

Figure 2 is a diagram showing setup information for a triangle to be rendered from three-dimensional space to a two-dimensional buffer;

Figure 3 is a state diagram showing the steps involved in drawing a triangle;

Figure 4 is a flowchart showing the steps involved in marking which triangles are active, and therefore visible, for the purposes of mapping color pixels thereto, in accordance with the invention;

Figure 5 is a flowchart showing the steps involved in mapping color to the active pixels calculated in Figure 4;

Figure 6 is a block diagram of a general-purpose personal computer ("PC") incorporating graphics acceleration hardware in accordance with the invention;

Figure 7 is a representation of the contents of a buffer once identifiers of a first triangle have been written into it;

Figure 8 is a representation of the buffer of Figure 7 after identifiers of a second triangle have been written into it; and

Figure 9 is a flowchart showing the steps involved in processing triangles after setup, in accordance with the invention.

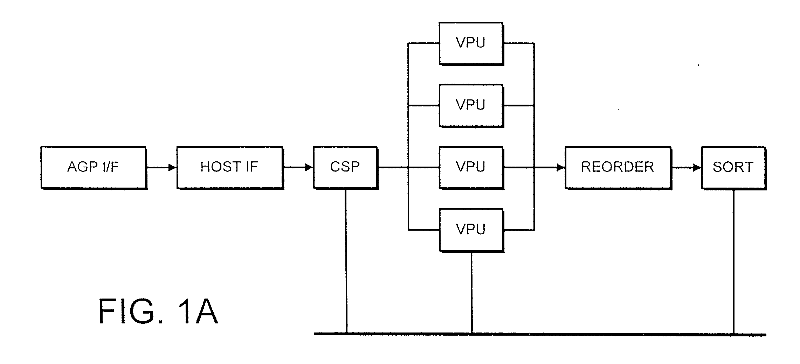

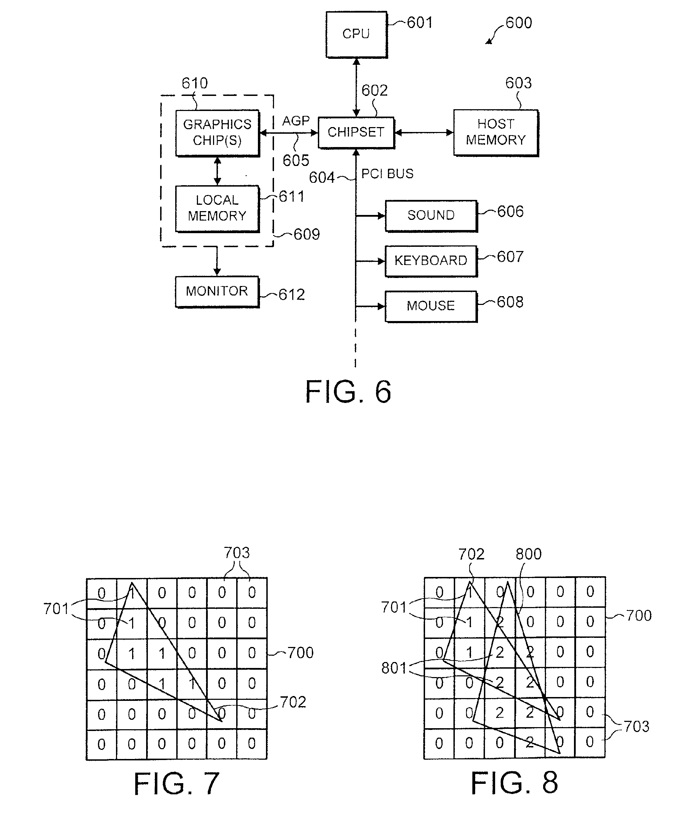

Figure 1A shows an architecture for generating a two dimensional output for display on, say, a computer monitor, such as that shown in Figure 6, based on representations of one or more polygons in three dimensional space. In most cases, including the preferred embodiment, the polygons will take the form of triangles. This is because triangles are always planar and convex, and therefore mathematically easier to deal with than other polygons.

In Figure 1A, there is shown a graphics accelerator card 10 that includes an Accelerated Graphics Port (AGP) interface 11 connected to a host interface 12. The host interface is in turn connected to a Command Stream Processor (CSP) 13. The CSP has a variety of functions. For example, it interprets the graphics command stream, differentiating between the vertex information and the state information. It is responsible for fetching data from the host. It can also reformat vertex data into a form more suitable for the Vertex Processing Units (VPUs) described below, packetising the data where necessary.

The CSP 13 is in communication with the video card system memory (not shown) via an on-board bus 14, and is also connected to a set of programmable Vertex Processing Units (VPUs) 15 which are themselves connected to the bus 14 to enable access to the video card and system memory.

The CSP controls the VPU processors 15 on the basis of instructions from the host computer (as described later in relation to Figure 6). The processed polygon data from the VPU processors 15 is then reordered and sorted for display by reordering and sorting circuitry 16 and 17 respectively.

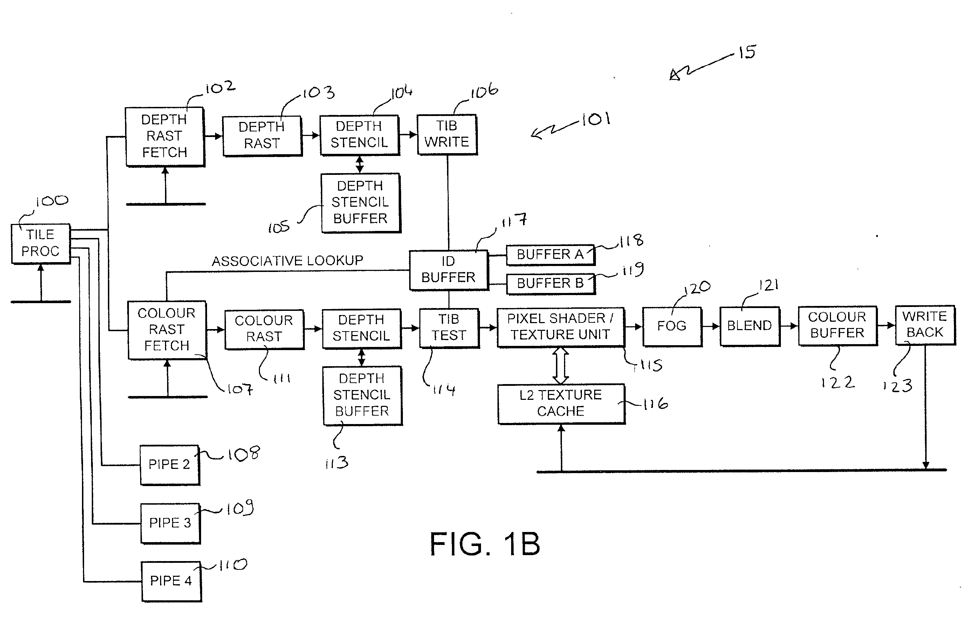

One of the VPU processors 15 will now be described in more detail with reference to Figure 1B. The multiple VPU processors 15 are substantially identical. The advantages and disadvantages of pipelined processing are well understood.

However, the highly repetitive nature of calculations used in video acceleration programming, along with the relatively small number of branches and jumps (all of which behave predictably) makes pipelining particularly well suited to this type of processing.

With reference to Figure 1B, this shows the VPU 15 as having four pipelines 101, 108, 109 and 110. In practice, more or less pipelines can be used. The first pipeline 101 is shown in more detail. The other pipelines 108, 109 and 110 will have generally the same structure. The input to each of the pipelines is provided by a tile processor 100 which fetches the tile data from memory and feeds the rasterizing units. The tile processor also generates the triangle identifiers and maintains the triangle buffers.

The tile processor provides an output to a depth raster fetch unit 102 which is arranged to request a triangle for processing. This depth information is provided to a depth raster unit 103 which is arranged to rasterize only the depth value for a given triangle.

The output of the depth raster unit 103 is input to a depth stencil unit 104 which is connected to a depth stencil buffer 105. The depth stencil unit and buffer are arranged to check whether the depth and stencil test passes and updates the depth and stencil buffers accordingly.

The output of the depth stencil unit is input to triangulation information buffer TIB write unit 106. This unit 106 is arranged for those pixels in the triangle which survive the depth and stencil test, to write the corresponding identifiers to the identification buffer 117. The ID buffer is connected to a first buffer 118 and a second buffer 119.

The output of the tile processor 100 is also input to a color raster fetch unit 107 which is arranged to fetch a triangle from the triangle buffer with an identifier that is valid in the identification buffer. For this reason there is a associative look up connection to the identification buffer 117.

The output of the color raster fetch unit 107 is provided to a color raster unit 111 which is arranged to rasterise only the color value (diffuse and specular) for each surviving triangle. The output of the color raster unit 111 is input to a depth stencil unit 112 which is connected to a depth stencil buffer 113. The depth stencil unit 112 and depth stencil buffer 113 provide the same function as the depth stencil unit 104 and depth stencil buffer 105 described previously.

The output of the depth stencil unit 112 is connected to a triangulation information buffer test unit 114 which is arranged so that if the color rasterized pixel passes the identifier test (ie the triangle identifier - that is the identifier in the triangle identifier buffer at that pixel position), then the pixel is passed on to a pixel shader/texture unit 115 which is connected to a texture cache 116. The pixel shader/texture unit 115 is connected to a fog unit 120 which computes the fog value based on the the distance from the observer and applies to the texture mapped pixel. The output of the fog unit 120 is input to a blending unit 121 which provides a blending operation. The output of the blending unit 120 is input to a color buffer 122 the output of which is connected to a write back unit 123. The output of the write back unit 123 is fed back to the texture cache 116.

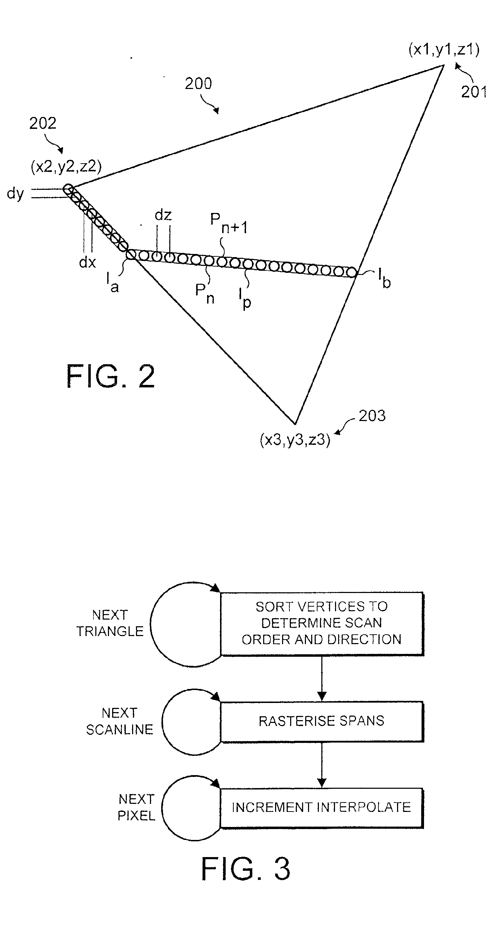

Initially, triangles are set up for scan conversion. This is shown in more detail in Figure 2, in which is shown an exemplary triangle 200 ready for scan conversion. The triangle 200 is defined by set of three tuplets 201, 202 and 203 that specify coordinates, colour and texture information at each vertex. These tuplets are:

$$(X_1, Y_1, Z_1, R_1, G_1, B_1, A_1, U_1^1 V_1^1, \ldots, U_n^1, V_n^1) \tag{1}$$

$$(X_2, Y_2, Z_2, R_2, G_2, B_2, A_2, U_1^2, V_1^2, \ldots, U_n^2, V_n^2) \tag{2}$$

$$(X_3, Y_3, Z_3, R_3, G_3, B_3, A_3, U_1^3, V_1^3, \ldots, U_n^3, V_n^3) \tag{3}$$

The values represented by the variables will be well understood by those skilled in the art of three-dimensional graphics. The tuplet information represents values of vertices of the triangle. By definition, this means that they lie in the plane of the triangle, so the triangle can be rasterised by interpolating the values at those vertices. Also, whilst only one set of colour components (RGB) is defined in the above tuplets, it is common for two sets to be defined, one for diffuse lighting and the other for specular lighting.

As is shown in Figure 3, there are three states involved in rasterising triangles:

1. For each triangle, the gradient of the variables must be calculated;
2. The start values for each span must be calculated; and
3. For each pixel, it must be ascertained whether the pixel must be plotted and, if so, the pixel's value must be determined.

In prior art methods, every pixel that passes the depth buffer test is plotted. This means that, unless the triangles are depth sorted and plotted from front to back, triangles that will not ultimately be visible will still be rasterised. Moreover, such triangles will also be texture mapped, which places an undesirable burden on memory bandwidth.

In accordance with the preferred embodiment, this "overdraw" problem is ameliorated by making a depth assessment of each pixel prior to full rendering. In this way, only those triangles that will actually be visible in the final image will actually go through the relatively bandwidth-hungry rendering stages. It will be appreciated by those skilled in the art that this has the added advantage of speeding up subsequent anti-aliasing procedures.

In the preferred embodiment, this result is achieved by allocating a relatively unique identifier to each triangle to be rendered. By "relatively unique", it is meant that each triangle is uniquely identified with respect to all other triangles that define the three dimensional components of a particular tile or frame being rendered. For example, a triangle that appears in consecutive frames or adjacent tiles may well be allocated a different identifier in each of those frames.

Referring to Figures 1 and 3, each triangle is rasterised to translate the mathematically-defined triangle into a pixel-defined triangle. Rasterising is well known to those skilled in the art, and so will not be described in detail. Examples of suitable rasterising techniques are described in "Computer Graphics: Principles and Practice" by James Foley et al.

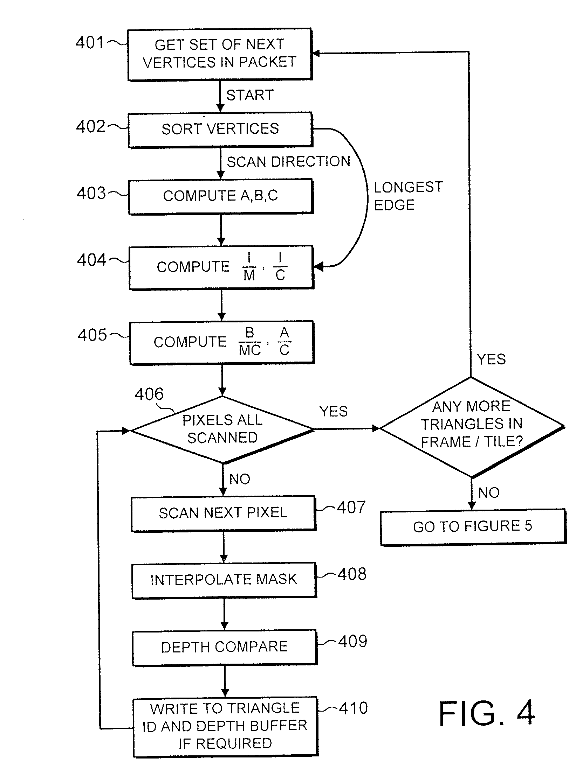

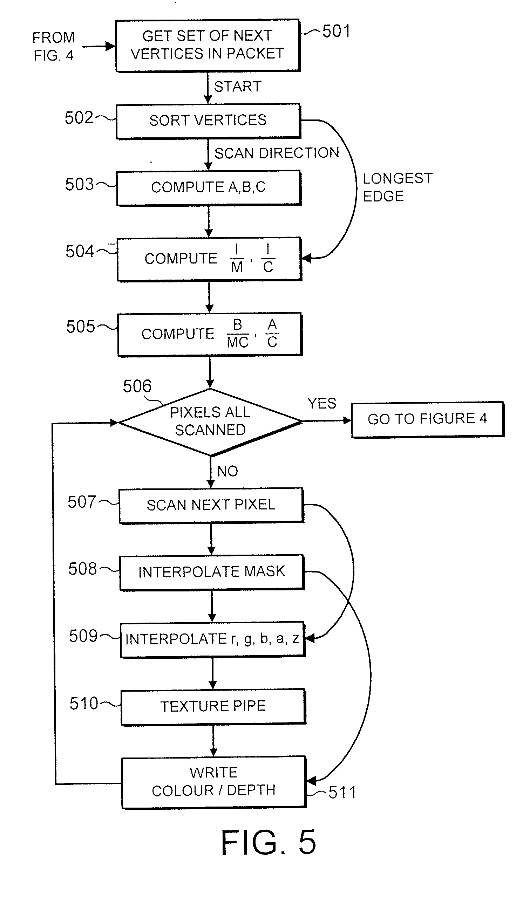

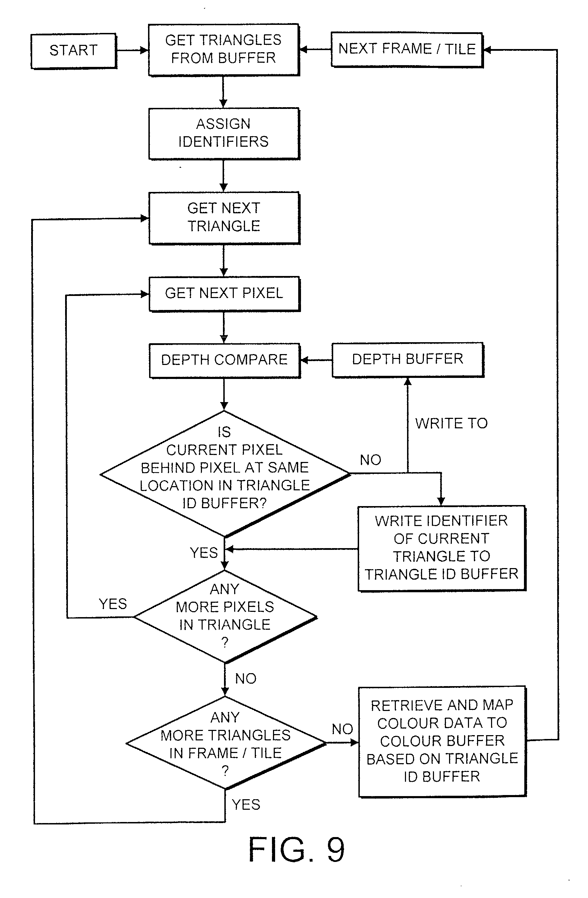

Figure 4 represents the steps involved in finding out which triangles will be visible and therefore need to be rendered, whilst Figure 5 represents the steps involved in plotting colour/texture pixels to the colour buffer for the visible pixels determined in Figure 4. Figure 9 summarises these steps in a more simplified format.

Prior to the steps of Figure 4 being taken for a given frame or title, each pixel location in the depth-buffer is set to a "far distance" value, such that any pixel subsequently depth-compared with one of the initial values will always be considered "on top" of the initial value. It will be noted that steps 402 to 408 of Figure 4 correspond with steps 502 to 508 to Figure 5, and in some embodiments can be performed in the same hardware.

In step 409, a comparison is made between the depth value of the current pixel and that representing the corresponding pixel location in the depth-buffer. If the pixel already at that position in the colour buffer has a depth greater than that of the value at the corresponding position in the depth buffer, then the identifier for the triangle being compared is written into the triangle identification buffer and the depth overwritten into that position in the depth buffer.

For the first triangle being scanned, the contents of the identification buffer and the depth-buffer are shown in be Figure 7. It will be noted that all values in the identification buffer 700 are zero other than those pixel locations 701 associated with the fist triangle 702. Naturally, in alternative embodiments, any other default value can be used to represent a "no triangle" state.

Each of the pixel locations corresponding to the pixels generated in relation to the first triangle 702 contains the value of the unique identifier originally allocated to the triangle (in this case, the digit "1"). Each corresponding pixel location in the depth-buffer has stored within it a z-value associated with that pixel.

For subsequent triangles being scanned, the depth value of the current pixel being scanned is compared to the depth value stored in the pixel location in the depth-buffer corresponding to that of the triangle. It will be appreciated that, if the corresponding pixel location has not yet had triangle data written to it, the pixel presently being considered will by definition be visible in the event that no further triangles have pixels at that location. The unique identifier associated with the current triangle will then be written directly to the corresponding pixel location to replace the default value.

The contents of the triangle identifier buffer after a second triangle 800 has been written to it is shown in Figure 8, along with the first triangle 702 from Figure 7. It will be noted that the second triangle 800 is in front of the first triangle 702 where they overlap, and so the unique identifier 801 of the second triangle (the digit "2") has been written over the first triangle identifiers in the pixel locations corresponding with the overlap area. Similarly, in the depth buffer the depth values corresponding to the overlapping second triangle have also overwritten the depth values of the first triangle. Those portions of the second triangle 800 that are not overlapping the first triangle 700 are also written to the depth and triangle identifier buffers.

Steps 401 to 410 are repeated until all triangles for the frame or tile being rendered have been processed. In the present example, only the two triangles need to be rendered, so the resultant triangle identifier buffer state is that shown in Figure 8.

At this stage, the final rendering procedure shown in the flowchart 500 of Figure 5 is implemented. The initial step 501 is to search the ID buffer to locate an active triangle. A triangle can be considered active if one or more pixels associated with it are in the depth-buffer. As each active triangle is found, a corresponding set of vertices is retrieved from memory.

Further steps are then undertaken in accordance with steps 502 to 505, which are known to those skilled in the art and therefore not described in detail. Once step 507 is reached, however, things proceed differently from the procedure of Figure 4. The interpolate mask is still generated, in accordance with step 508. However, r, g, b, a and z are then interpolated in step 509 for each of the live pixels of present triangle. The resultant values are then passed to the texture pipe 510, in which texture mapping takes place. This involves mapping a texture stored in memory to the triangle on a pixel-by-pixel basis. The procedure is relatively well known in the art, and so will not be described here in further detail.

It will be noted from Figure 5 that there is some feed-forwarding of data, in particular from the output of step 507 (to step 509) and step 508 (to step 511).

Once all pixels have been scanned and texture/colour mapped, other processing, such as anti-aliasing, can be applied in accordance with known procedures. The resultant frame, representing a two-dimensional view of the three dimensional representations, is output to a display device such as a computer monitor.

Figure 9 shows a summarised version of the steps described in relation to the other Figures. The steps themselves are self-explanatory in view of the previous detailed description and so will not be described in further detail herein.

Other architectures and approaches can be used in conjunction with the invention. For example, it will be appreciated that the invention is amenable to use with different triangle plotting schemes, such as strips or fans. Also, the method can be applied to entire frames, or sub-frames in the form of tiles, depending upon the desired implementation. It will be appreciated that additional steps may be required in some cases to, for example, convert polygons (generated during tiling or due to framing considerations) into triangles, but this is well known within the art and so has not been described further herein.

In the preferred form, the invention is embodied in a specialist graphics processor on a graphics accelerator card. Such cards are used as components in personal and business computers, such as an IBM compatible PC 600 shown in Figure 6. In the embodiment illustrated, the PC includes, amongst other things, a general-purpose processor in the form of a Pentium III processor 601, manufactured by the Intel Corporation. Via a chipset 602, the processor 601 communicates with host memory 603, a PCI bus 604 and an Advanced Graphics Port (AGP) bus 605. The PCI bus 604 allows the chipset 602 to interface with various peripheral components, such as a soundcard 606, a keyboard 607 and a mouse 608. The AGP bus 605 is used to communicate with a graphics accelerator card 609, which includes, amongst other things, a graphics chip 610 and local memory 611. The graphics card outputs graphics signals to a computer monitor 612. The preferred embodiment of the present invention is incorporated in the hardware, software and firmware of the graphics card 609.

It will be seen from the detailed description that the present invention provides a method of rendering polygons from a three-dimensional to a two-dimensional space, whilst reducing overall texture bandwidth requirements.

Although the invention has been described with reference to a specific embodiment, it will be appreciated by those skilled in the art that the invention can be embodied in many other forms.

**Claims**

1. A method of rendering a plurality of triangles into a colour buffer defined by a plurality of pixel locations, utilising a triangle identification buffer and a depth buffer, the method including the steps of:

   (a) assigning a relatively unique identifier to each of the triangles to be rendered;
   (b) generating triangle pixels based on a first one of the triangles, each of the triangle pixels having associated with it an (x,y) position and a depth value;
   (c) writing the depth value associated with each of the pixels to pixel locations in the depth buffer, the pixel locations corresponding with the respective (x,y) positions generated in step (b);
   (d) writing the identifier associated with the triangle to the pixel locations in the buffer corresponding with the respective (x,y) positions generated in step (b); and
   (e) for each remaining triangle to be rendered:

      (i) generating triangle pixels, each of the triangle pixels having associated with it an (x,y) position and a depth value;
      (ii) comparing the depth value of at least some of the triangle pixels generated in (i) with the depth values stored at respective corresponding pixel locations in the depth buffer, thereby to determine for each pixel location whether the triangle whose identifier is already in the triangle identification buffer is in front of or behind the triangle being compared; and

(iii) in the event that the triangle whose identifier is already in the triangle identification buffer is behind the triangle being compared at a given pixel location, writing the identifier of the triangle being compared into the identification buffer at that pixel location;

(f) mapping colour data into the colour buffer on the basis of the contents of the triangle buffer once at least a plurality of the triangles has been depth compared.

2. A method according to claim 1, wherein step (f) includes the substeps of:

(i) selecting an identifier from the identifier buffer;
(ii) retrieving from the triangle buffer the triangle associated with the selected identifier;
(iii) rasterising the triangle, computing colour only, such that, for each pixel coordinate being considered, if the identification buffer contains the identifier of the triangle being rasterised, writing the colour value of the triangle at that coordinate to the colour buffer; and
(iv) repeating substeps (i) to (iii) until the triangles associated with all identifiers in the identifier buffer have been rasterised.

3. A method according to claim 1 or 2, wherein, in the event a triangle being rasterised in step (f) has a texture associated with it, step (f) further includes the substep of forwarding information to the texture cache to enable prefetching of the texture to commence.

4. A method according to any one of the preceding claims, wherein the depth buffer and the triangle identification buffer are combined, such that, at each address defining a pixel location in the combined buffer, there is space for a depth value and a triangle identifier value.

5. A method according to claim 4, wherein the depth buffer and triangle buffer are combined with the colour buffer, such that, at each address defining a pixel location in the combined buffer, there is space for the depth value the triangle identifier value and colour values.

6. A method according to any one of the preceding claims, wherein the steps of generating triangle pixels include the sub-step of scan converting the triangles for which the pixels are to be generated.

7. A method according to any one of the preceding claims, wherein the color data are based on textures stored in an associated texture memory.

8. Computer apparatus having hardware components and being programmed with software, for implementing the method of any one of the preceding claims.

AGP I/F

HOST IF

CSP

VPU

VPU

VPU

VPU

REORDER

SORT

FIG. 1A

FIG. 1B

FIG. 2

FIG. 3

401 — GET SET OF NEXT VERTICES IN PACKET

START

402 — SORT VERTICES

SCAN DIRECTION

LONGEST EDGE

403 — COMPUTE A,B,C

404 — COMPUTE $\dfrac{I}{M}$, $\dfrac{I}{C}$

405 — COMPUTE $\dfrac{B}{MC}$, $\dfrac{A}{C}$

406 — PIXELS ALL SCANNED

YES — ANY MORE TRIANGLES IN FRAME / TILE?

YES

NO

NO — GO TO FIGURE 5

SCAN NEXT PIXEL — 407

INTERPOLATE MASK — 408

DEPTH COMPARE — 409

WRITE TO TRIANGLE ID AND DEPTH BUFFER IF REQUIRED — 410

FIG. 4

FROM
FIG. 4 → GET SET OF NEXT VERTICES IN PACKET — 501

START

502 — SORT VERTICES

SCAN DIRECTION

LONGEST EDGE

503 — COMPUTE A,B,C

504 — COMPUTE $\frac{1}{M}$ , $\frac{1}{C}$

505 — COMPUTE $\frac{B}{MC}$ , $\frac{A}{C}$

506 — PIXELS ALL SCANNED — YES → GO TO FIGURE 4

NO

507 — SCAN NEXT PIXEL

508 — INTERPOLATE MASK

509 — INTERPOLATE r, g, b, a, z

510 — TEXTURE PIPE

WRITE COLOUR / DEPTH — 511

FIG. 5

FIG. 6

FIG. 7

FIG. 8

FIG. 9

# EP 1 306 811 A1

**European Patent Office**

## EUROPEAN SEARCH REPORT

Application Number

EP 02 25 7324

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | YU Y: "Efficient visibility processing for projective texture mapping - principles and practice" COMPUTERS AND GRAPHICS, PERGAMON PRESS LTD. OXFORD, GB, vol. 23, no. 2, April 1999 (1999-04), pages 245-253, XP004165788 ISSN: 0097-8493 * page 245, right-hand column, line 19 - page 246, left-hand column, line 18 * * page 247, left-hand column, paragraph 2 - paragraph 2.1. *<br>--- | 1-8 | G06T15/40 |
| A | EP 0 606 685 A (IBM) 20 July 1994 (1994-07-20) * abstract; claims 1-12 *<br>----- | 1-8 | |
| | | | **TECHNICAL FIELDS SEARCHED** (Int.Cl.7)<br><br>G06T |

The present search report has been drawn up for all claims

| Place of search | Date of completion of the search | Examiner |
|---|---|---|
| THE HAGUE | 26 February 2003 | Perez Molina, E |

EPO FORM 1503 03.82 (P04C01)

**ANNEX TO THE EUROPEAN SEARCH REPORT**
**ON EUROPEAN PATENT APPLICATION NO.**     EP 02 25 7324

This annex lists the patent family members relating to the patent documents cited in the above-mentioned European search report.
The members are as contained in the European Patent Office EDP file on
The European Patent Office is in no way liable for these particulars which are merely given for the purpose of information.

26-02-2003

| Patent document cited in search report | | Publication date | Patent family member(s) | | Publication date |
|---|---|---|---|---|---|
| EP 0606685 | A | 20-07-1994 | EP | 0606685 A1 | 20-07-1994 |
| | | | JP | 2769427 B2 | 25-06-1998 |
| | | | JP | 7141526 A | 02-06-1995 |
| | | | US | 5613050 A | 18-03-1997 |

EPO FORM P0459

For more details about this annex : see Official Journal of the European Patent Office, No. 12/82